# EUROPÄISCHE PATENTANMELDUNG

(11) **EP 0 849 857 A1**
(43) Veröffentlichungstag der Anmeldung: **24.06.1998**
(21) Anmeldenummer: 97121480.4
(22) Anmeldetag: 05.12.1997
(51) Int. Cl.: H02K 1/14, H02K 15/02, H02K 15/12

(54) **Stator für elektrodynamische Maschinen und Verfahren zu deren Herstellung**

(30) Priorität: 18.12.1996 DE 19652795
(71) Anmelder: SIEMENS AKTIENGESELLSCHAFT, 80333 München (DE)
(72) Erfinder: Schulz, Udo, Dipl.-Ing. (FH), 97616 Bad Neustadt (DE); Georg, Klaus, Dipl.-Ing., 97618 Heustreu (DE)

(57) **Zusammenfassung**

Stator für elektrodynamische Maschinen, bestehend aus einem Jochblechpaket (8) und Polen (1), die aneinandergefügt Statornuten mit hoher Kupferfüllung und kurzen Wickelköpfen ergeben und bei dem die am Jochblechpaket (8) befestigten Pole (1) vorab mit extern gewickelten Polspulen (6) von außen bestückbar sind.

Allen aufgezählten Verfahren zur Herstellung eines solchen Stators ist gemein, daß extern gewickelte Polspulen (6) auf ein zusammenhängendes Sternpaket (3) oder Einzelpole gesteckt werden, und erst im Anschluß daran in ein Jochblechpaket (8) eingesetzt werden.

## Beschreibung

Die Erfindung betrifft einen Stator für elektrodynamische Maschinen gemäß Anspruch 1.

In EP - 0 629 034 A2 ist ein Stator beschrieben, der aus einzelnen kreissegmentähnlichen Statorelementen zusammengesetzt ist. Dabei müssen eine Vielzahl einzelner Elemente zusammengefügt und verschweißt werden. Die Schweißnähte bilden dabei einen Kurzschlußkäfig, der zu einer Erhöhung der Verluste führt. In EP - 0 507 989 B1 werden Wicklungsspulen des Stators von der Ständerbohrung aus aufgeschoben, so daß außer einer aufwendigen Montage zusätzliche Klemmteile in den Nuten erforderlich sind, um die Spulen zu fixieren. Nachteilig dabei ist, daß der Kupferfüllfaktor der Statornuten durch Klemmteile reduziert wird.

Der Erfindung liegt die Aufgabe zugrunde, durch einfache Montage einen Stator mit hoher Kupferfüllung seiner Nuten herzustellen, der außerdem keine nennenswerten Streuverluste durch Kurzschlußbrücken der Statorpole aufweist.

Die Lösung der gestellten Aufgabe gelingt erfindungsgemäß dadurch, daß der Stator für elektrodynamische Maschinen, bestehend aus einem Jochblechpaket und Polen, die aneinandergefügt Statornuten ergeben, mit hoher Kupferfüllung und kurzen Wickelköpfen, und die, am Jochblechpaket befestigt, vorab mit extern gewickelten Polspulen von außen bestückbar sind. Die Innenkontur des Jochblechpaketes kann dabei polygonförmig oder rund sein. Ein Verfahren, um einen derartigen Stator herzustellen, ist dabei, daß die Statorpole ursprünglich ein mit ihren Polschuhen zusammenhängendes Sternpaket bilden, auf das von außen extern gewickelte Polspulen gesteckt werden. Das voll bestückte Sternpaket wird in das Jochblechpaket eingesetzt. Die Nuträume werden unter Vakuum mit einem dafür geeigneten Harz ausgegossen. Nach dem Aushärten des Harzes wird die Statorbohrung ausgedreht, bis einzelne Polschuhe bestehen, d. h. bis die Nutschlitze vorhanden sind. Durch die Nutschlitze reduzieren sich die Streuverluste beträchtlich.

Ein weiteres Verfahren, um derartige Statoren herzustellen besteht darin, Einzelpole auf eine der Ständerbohrung angepaßten Hilfskonstruktion zu setzen und mit Kunststoff auszuspritzen. Das so entstandene Sternpaket, bei dem Ständerbohrung und Fügeflächen freibleiben, wird mit Polspulen bestückt und anschließend in das Jochblechpaket eingesetzt.

Bei einer kreisförmigen Jochblechpaketinnenkontur kann das Sternpaket geschränkt werden, um so die Nutrastmomente zu reduzieren.

Ein weiteres Verfahren einen derartigen Stator herzustellen besteht darin, die mit extern gewickelten Polspulen versehenen Einzelpole einzeln in das Jochblechpaket einzufügen. Dabei sind u.a. schwalbenschwanzartige, T-förmige und amboßähnliche Verbindungselemente einsetzbar.

Die Verbindung zwischen den Polen und dem Jochblechpaket kann dabei durch thermische oder mechanische Dehnung und anschließendes Einsetzen oder durch Verkleben hergestellt werden. Das Vergießen der Nuträume mit Harz erfüllt mehrere Funktionen. Neben der Isolationsfertigkeit werden die Wicklungen mechanisch fixiert, so daß auch bei hohen Drehzahlen des Motors keine Beeinträchtigungen durch lose Halterungsteile zu erwarten sind. Anhand eines in der Zeichnung dargestellten Ausführungsbeispiels wird der Anmeldungsgegenstand näher beschrieben. Es zeigt:
- FIG 1: Statorpole, die ein mit ihren Polschuhen zusammenhängendes Sternpaket bilden,
- FIG 2: ein Sternpaket, das mit Polschuhen bestückt ist,
- FIG 3: ein mit Polschuhen bestücktes Sternpaket, das in ein Jochblechpaket eingefügt ist,
- FIG 4: mit Polspulen bestückte Statorpole in einem Jochblechpaket, das eine polygonförmige Innenkontur aufweist,
- FIG 5: mit Polspulen bestückte Statorpole, die auf verschiedene Arten am Jochblechpaket befestigt sind.

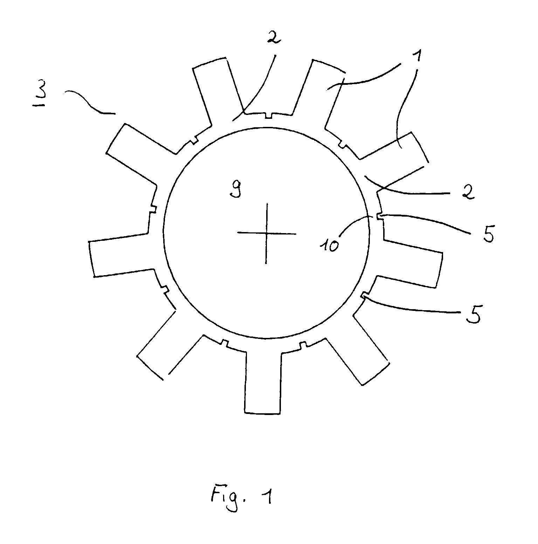

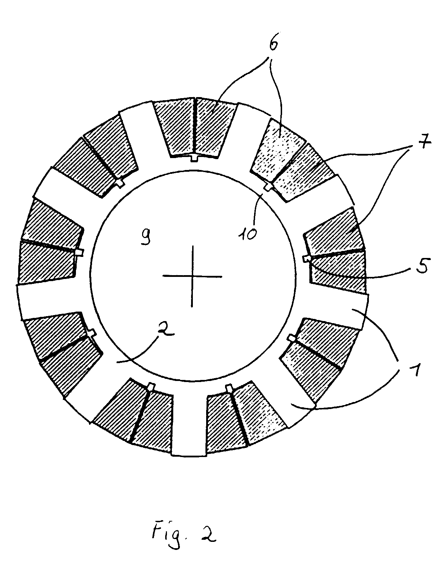

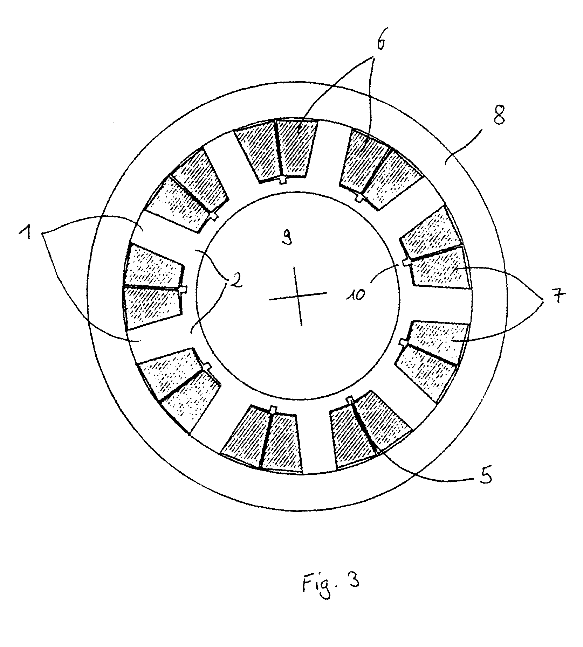

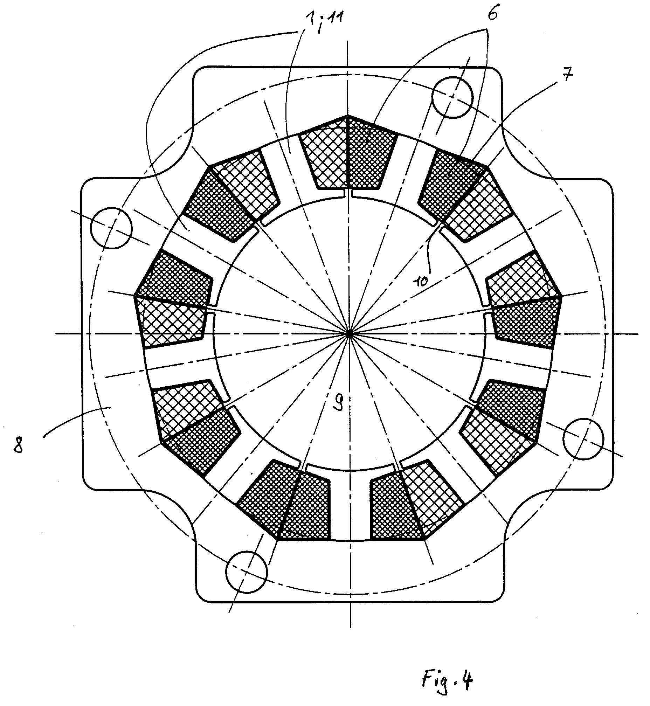

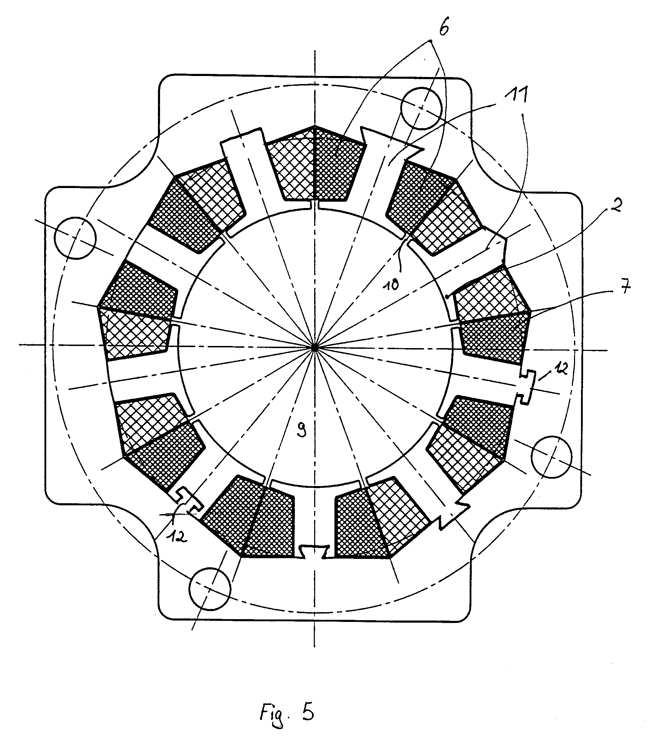

FIG 1 zeigt Statorpole 1, die ein mit ihren Polschuhen 2 zusammenhängendes Sternpaket 3 bilden. Zwischen den einzelnen Polen 1 sind dabei Nutschlitzansätze 5 mittig angeordnet, auch außermittig angeordnete Nutschlitzansätze 5 sind möglich, dabei können Nutrastmomente von Synchronmaschinen reduziert werden. FIG 2 zeigt das mit Polspulen 6 bestückte Sternpaket 3, bei dem die hohe Kupferfüllung 7 angedeutet ist. FIG 3 zeigt ein mit Polspulen 6 bestücktes Sternpaket 3, das in ein Jochblechpaket 8 eingefügt ist. Die form- und haftschlüssige Verbindung kann dabei durch Verkleben oder thermische oder mechanische Dehnung des Jochblechpaketes 8 erfolgen. Danach werden die Nuträume unter Vakuum vergossen. Nach dem Aushärten wird die Ständerbohrung 9 ausgedreht, bis die Polschuhverbindungen 10 aufgehoben sind (siehe auch FIG 4). FIG 4 stellt außerdem auch das Endresultat dar, wenn Einzelpole 11 auf eine Hilfskonstruktion gesetzt und anschließend in das Jochblechpaket 8 eingesetzt wurden. FIG 5 zeigt Befestigungsmöglichkeiten der mit Polspulen 6 bestückten Einzelpole 11 durch Schwalbenschwänze negativer 12 und positiver 13 Art.

## Patentansprüche

1. Stator für elektrodynamische Maschinen, bestehend aus einem Jochblechpaket (8) und Polen (1), die aneinandergefügt Statornuten ergeben mit hoher Kupferfüllung und kurzen Wickelköpfen, und bei dem die am Jochblechpaket (8) befestigten Pole (4) vorab mit extern gewickelten Polspulen (6) von außen bestückbar sind.

2. Stator nach Anspruch 1, **dadurch gekennzeichnet,** daß die Innenkontur des Jochblechpakets (8) polygonförmig oder rund ist.

3. Verfahren zur Herstellung eines Stators nach Anspruch 1, **dadurch gekennzeichnet,** daß die Pole (1) ursprünglich ein mit ihren Polschuhen (2) zusammenhängendes Sternpaket (3) bilden, auf das von außen extern gewickelte Polspulen (6) gesteckt werden, und das in ein Jochblechpaket (8) eingesetzt wird, wo dann die Nuträume unter Vakuum mit einem geeigneten Harz ausgegossen werden, um nach dem Aushärten des Harzes die Statorbohrung (9) auszudrehen bis einzelne Polschuhe (2) bestehen, d.h. bis die Nutschlitze vorhanden sind.

4. Verfahren zur Herstellung eines Stators nach Anspruch 1, **dadurch gekennzeichnet,** daß die Einzelpole (11) auf eine der Ständerbohrung (9) angepaßte Hilfskonstruktion gesetzt und mit Kunststoff ausgespritzt werden, das so entstandene Sternpaket, dessen Ständerbohrung (9) und Fügeflächen freibleiben, wird mit Polspulen bestückt und anschließend in das Jochblechpaket (8) eingesetzt.

5. Verfahren zur Herstellung eines Stators nach Anspruch 1, **dadurch gekennzeichnet,** daß die mit extern gewickelten Polspulen (6) versehenen Einzelpole (11) einzeln in das Jochblechpaket (8) eingefügt werden.

6. Verfahren nach einem der vorhergehenden Ansprüche, **dadurch gekennzeichnet,** daß das Polpaket bzw. Sternpaket (3) form- und/oder kraftschlüssig mit dem Jochblechpaket (8) verbunden wird.

7. Verfahren nach einem der vorhergehenden Ansprüche, **dadurch gekennzeichnet,** daß das Sternpaket (3) bzw. Polpaket durch thermische oder mechanische Dehnung des Jochblechpakets (8) eingesetzt wird.

8. Verfahren nach einem der vorhergehenden Ansprüche, **dadurch gekennzeichnet,** daß das Jochblechpaket (8) mit dem Sternpaket (3) bzw. Polpaket verklebt wird.
